Europäisches Patentamt

European Patent Office

Office européen des brevets

(19)

(11) Numéro de publication : **0 156 786**
**B1**

(12) **FASCICULE DE BREVET EUROPÉEN**

(45) Date de publication du fascicule du brevet :
28.09.88

(51) Int. Cl.⁴ : **A 01 G 31/02**

(21) Numéro de dépôt : **85870038.8**

(22) Date de dépôt : **14.03.85**

(54) **Elément poreux et perméable à l'eau pour la culture de plantes, ainsi que procédé de fabrication de cet élément.**

(30). Priorité : **19.03.84 LU 85256**

(43) Date de publication de la demande :
**02.10.85 Bulletin 85/40**

(45) Mention de la délivrance du brevet :
**28.09.88 Bulletin 88/39**

(84) Etats contractants désignés :
**BE DE FR GB NL**

(56) Documents cités :
**EP-A- 0 052 526**
**CH-A- 409 507**
**GB-A- 1 399 822**
**US-A- 3 336 129**

(73) Titulaire : **Dicalite Europe-Nord**
**Louizalaan 430**
**Brussel (BE)**

(72) Inventeur : **Willems, Yvan F.**
**Knikkerstraat 11**
**B-9960 Assenede (BE)**

(74) Mandataire : **Callewaert, Jean et al**
**Bureau Gevers S.A. rue de Livourne 7 bte 1**
**B-1050 Bruxelles (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## 0 156 786

**Description**

La présente invention est relative à un élément poreux et perméable à l'eau pour la culture de plantes tel que défini dans le préambule de la revendication 1.

Il est connu que l'on peut réaliser de tels éléments en laine de roche, en laine de verre, ou en mousse de polyuréthane. Ces éléments se présentent généralement, soit sous la forme de petits blocs prismatiques, soit sous la forme de mats d'une longueur déterminée et sont, dans la plupart des cas, pourvus d'un ou de plusieurs trous dans lesquels peuvent être déposés soit des semences, soit les racines de jeunes plantes. Ils sont alors agencés dans des serres, sur des plateaux irrigués et/ou aspergés par de l'eau contenant les produits fertilisants nécessaires à la germination et/ou croissance des plantes.

Ainsi, cette eau peut monter dans ces éléments, par capillarité, à partir de leur base et/ou descendre dans ceux-ci à partir de leur face supérieure, p. e. par un versement goutte à goutte.

La nature et la structure de ces éléments doivent donc être telles qu'on puisse y créer et maintenir un équilibre entre les phases aqueuse et gazeuse pour assurer une germination rapide des semences et un développement correct des racines.

D'une façon générale, les éléments réalisés en laine ou fibres minérales ou en mousse de polyuréthane présentent l'inconvénient qu'il est très difficile à contrôler la teneur relative en eau et en air, et, dans la plupart des cas, la teneur relative en eau est trop élevée, surtout si elle est introduite par les dessus des éléments.

Le document EP-A-0 052 526 concerne un récipient contenant un milieu pour la culture de plantes qui est essentiellement formé par une mousse hydrophobe.

Un des buts essentiels de la présente invention est de présenter un élément du type précité dans lequel il est parfaitement possible de contrôler le rapport relatif de l'air et de l'eau contenus dans l'élément, en fonction de la nature des plantes à cultiver.

A cet effet, suivant l'invention, l'élément comprend un amas de particules contenant un excès de particules hydrophiles, de préférence relativement peu compressibles à l'état sec, de dimensions variées, fixées les unes aux autres essentiellement par un nombre limité de points de contact en formant entr'elles des canaux sensiblement capillaires, ces particules présentant sensiblement la granulométrie suivante, exprimée en tamis « standard » américains :

| n° de tamis | retenu au tamis en poids |
|---|---|
| + 18 | 0-5 % |
| — 18/ + 30 | 5-10 % |
| — 30/ + 50 | 10-35 % |
| — 50/ + 100 | 20-35 % |
| — 100/ + 150 | 10-25 % |
| — 150/ + 200 | 5-15 % |
| — 200 | 10-20 % |

Suivant une forme de réalisation particulièrement avantageuse, les particules sont constituées de perlite expansé, de vermiculite expansé et/ou d'argile expansé.

Suivant une forme de réalisation préférentielle de l'invention, l'élément contient un liant hydrophile, insoluble dans l'eau, non toxique et pouvant de préférence former avec de l'eau un gel plastique, fixant les particules entr'elles, sensiblement par un nombre limité de points de contact, notamment un liant formé d'un hydrogel de polyacrylamide ou d'une émulsion bitumeuse.

L'invention concerne également un procédé de fabrication des éléments poreux et perméables à l'eau pour la culture des plantes tels que décrits ci-dessus.

Ce procédé est caractérisé par le fait qu'on pulvérise un liant, en solution, en suspension ou en émulsion sur des particules hydrophiles, de manière à enrober au moins partiellement la plus grande quantité de ces particules d'un film de ce liant, qu'on soumet les particules humectées au moins partiellement par le liant à une opération d'agglomération et d'agrégation jusqu'à former les éléments susdits et qu'on sèche ensuite éventuellement le liant.

D'autres détails et particularités de l'invention ressortiront de la description donnée ci-après, à titre d'exemples non limitatifs, de quelques formes de réalisation particulières de l'élément poreux et perméable suivant l'invention, ainsi que d'un procédé pour fabriquer cet élément.

La figure 1 est une vue en élévation, avec brisure partielle d'une première forme de réalisation de l'élément poreux et perméable suivant l'invention.

La figure 2 est une vue suivant la ligne II-II de la figure 1.

La figure 3 est une vue latérale, avec brisure partielle, d'une deuxième forme de réalisation de l'élément poreux et perméable suivant l'invention.

La figure 4 est une vue suivant la ligne IV-IV de la figure 3.

La figure 5 est une vue de détail, à plus grande échelle, d'une portion d'une des formes de réalisation précédentes.

Dans les différentes figures, les mêmes chiffres de référence se rapportent à des éléments analogues ou identiques.

D'une façon générale, l'invention concerne un élément poreux et perméable à l'eau pour la culture de plantes qui est essentiellement constitué d'un amas de particules, de dimensions variées, dont un excès de particules sont hydrophiles et de préférence peu compressibles à l'état sec.

Ces particules sont fixées les unes aux autres essentiellement par un nombre limité de points de contact, de manière à ménager entr'elles des canaux sensiblement capillaires.

La structure et la nature des particules sont telles que l'élément permet, avec ces canaux capillaires, d'une part, d'absorber et de fixer l'eau sous une forme disponible aux plantes et, d'autre part, de retenir de l'air sensiblement en équilibre avec cette eau.

Pour obtenir ces canaux capillaires, les particules sont de préférence de formes irrégulières et présentent des dimensions variées, qui, suivant les tamis standards américains, sont comprises entres les tamis n° 325 et 16, créant ainsi une quantité relativement importante de vides capillaires entre les différentes particules.

En effet, grâce à un choix judicieux de la distribution granulométrique des particules on obtient que les vides relativement importantes existant entre des grosses particules soient remplis par des plus petites particules qui sont fixées entr'elles et aux plus grosses particules en un nombre limité de points de contact, entre lesquelles subsistent donc lesdits canaux capillaires.

Par ailleurs, si on fait usage de particules poreuses, il y a lieu de noter que le rapport : air/eau dans l'élément augmente avec la dimension moyenne des particules.

Ceci peut s'expliquer par le fait que l'eau est surtout retenue à la surface extérieure des particules et que l'air est essentiellement emprisonné dans les pores ou cellules centrales des particules. Ainsi, on obtient un certain nombre de cellules ou pores pouvant contenir essentiellement de l'eau, notamment les cellules et pores de surface, et un certain nombre pouvant contenir essentiellement de l'air.

Suivant l'invention, il a été constaté que les résultats très favorables à cet égard sont obtenus, si les particules présentent sensiblement la granulométrie suivante ; exprimée en tamis « standard » américains.

| n° de tamis | retenu au tamis en poids |
|---|---|
| + 18 | 0-5 % |
| — 18/ + 30 | 5-10 % |
| — 30/ + 50 | 10-35 % |
| — 50/ + 100 | 20-35 % |
| — 100/ + 150 | 10-25 % |
| — 150/ + 200 | 5-15 % |
| — 200 | 10-20 % |

Suivant une forme de réalisation particulière de l'invention, pour obtenir des particules permettant d'emprisonner efficacement de l'air, on fait usage de particules qui sont constituées d'une manière expansée, et notamment de particules présentant une structure vésiculaire sensiblement rigide, à micro-cellules.

Ainsi, ces particules peuvent être, suivant l'invention, à base de minéraux du type perlitique du groupe des verres volcaniques, tels que la perlite, le « pitchstone », à base de vermiculite, ou à base d'argile expansée.

En outre, ces particules peuvent être utilisées seul ou en mélange avec d'autres produits fibreux tels que par exemple la cellulose, la laine de verre ou de roche, et les fibres synthétiques en général.

Les minéraux du type perlitique sont principalement constitués de silice et d'alumine et sont essentiellement caractérisés par une structure vitreuse et par la présence d'une petite quantité, par exemple de l'ordre de 2 à 6 %, d'eau de combinaison.

Les verres volcaniques conviennent surtout lorsqu'ils contiennent une quantité suffisante d'eau de combinaison ou d'autres produits qui, par exemple, par leur décomposition sous l'effet de la chaleur, dégagent des produits gazeux.

En effet, pour obtenir des produits expansés, on broye ces minéraux à la granulométrie désirée et on les introduit dans un four, à une température de l'ordre de 900 à 1 200 °C. Sous l'action instantanée de cette haute température ces minéraux deviennent plastiques et l'eau de combinaison ou le gaz formé se dégage des minéraux pour former un produit expansé de structure sensiblement vésiculaire.

La perlite expansée obtenue par cette opération présente une couleur blanche ou légèrement colorée et une densité apparente pouvant varier entre de larges limites, de l'ordre de 30 kg/m$^3$ à 150 kg/m$^3$, suivant la qualité des minéraux et le procédé appliqué. Des résultats très avantageux ont été obtenus avec une perlite expansée dont la densité apparente était comprise entre 60 et 110 kg/m$^3$.

Si on examine cette perlite ainsi expansée sous le microscope, avec un agrandissement important, on distingue en effet dans la masse de particules trois types essentiellement différents : des granules vésiculaires présentant un nombre important de cellules polygonales, des cellules sphériques individuel-

0 156 786

les ayant des parois vitreuses très minces et des particules solides formées essentiellement par des débris de parois de cellules.

Ainsi, il pourrait être important, pour l'application envisagée suivant la présente demande de brevet, de préprer une perlite expansée dont les granules vésiculaires constituent la plus grande portion du volume total.

Si on fait usage de particules ne présentant pas de propriétés collantes ou agglutinantes, on peut, suivant leur nature, les soumettre à un frittage ou on peut former sur au moins une partie de la surface de ces particules un film collant au moyen d'un liant, permettant ainsi de réunir les particules entr'elles sous une forme désirée.

Le choix du liant dépend de différents paramètres tels que : le mécanisme de l'agglomération, l'aspect hydrophile des particules et leur stabilité mécanique, la capacité d'échange ionique, la phytotoxicité, les propriétés de dispersion, qui dépendent par exemple de la viscosité du produit, l'insolubilité du liant dans l'eau et le comportement de celui-ci vis-à-vis de la germination des semences et du processus de croissance des plantes.

Ainsi, il a été constaté que des résultats positifs ont été obtenus avec un liant à base d'hydrogel de polyacrylamide.

La quantité de liant utilisé et la façon dont celui est appliqué aux particules sont telles que ces dernières ne sont fixées entr'elles par pointes, de manière à ménager entre celles-ci des canaux capillaires.

De plus, il y a lieu de veiller à sauvegarder les propriétés des particules, et notamment de la perlite expansée en présence du liant, qui sont importantes pour la croissance des plantes.

Avantageusement, l'élément contient entre 1,5 et 10 %, en volume, de préférence entre 2 et 5 % de liant par rapport au volume apparent des particules.

Par ailleurs, il a été constaté que les propriétés adhésives de l'amide polyacrylique avec les particules, notamment de perlite expansée, sont accrues si on ajoute à ce liant un catalyseur du genre de dialdéhyde et notamment du glyoxal.

La vitesse de polymérisation du polyacrylamide et du glyoxal est la plus favorable à un pH compris entre 8 et 10, de préférence 8,5 à 9.

A cet égard, on fait par exemple usage d'une solution d'ammonium ou de carbonate de sodium.

L'influence du pH et de la quantité de glyoxal sur la polymérisation du polyacrylamide est illustrée par les tests suivants :

On prépare d'abord un hydrogel contenant 8 % en poids de polyacrylamide ayant un poids moléculaire de 300 000 et une viscosité à 25 °C de 250 à 300 centipoises.

Ensuite, on mélange un litre de cet hydrogel avec trois litres d'eau, le pH étant 6,8.

Dans un premier test on ajoute à un litre de la solution ainsi obtenue un millilitre de glyoxal. On fait varier le pH de cette solution par l'addition d'une solution d'ammonium à 25 %. Les résultats de ce test sont résumés dans le tableau suivant :

Tableau I

| $NH_4OH$ (25 %) en ml | pH | temps de polymérisation |
|---|---|---|
| 0,15 | 8,8 | 6 heures |
| 0,6 | 9,5 | 2 heures |
| 0,82 | 9,8 | 55 minutes |

Dans un deuxième test, on ajoute à un litre de cette solution deux millilitres de glyoxal. On fait également varier le pH par l'addition d'une même solution d'ammonium.

Les résultats de ce test sont résumés dans le tableau II ci-après :

Tableau II

| $NH_4OH$ (25 %) en ml | pH | temps de polymérisation |
|---|---|---|
| 0,27 | 9,1 | 2 heures |
| 0,6 | 9,6 | 50 minutes |
| 1,4 | 10,0 | 20 minutes |

4

Il est également possible, suivant l'invention, pour assurer la réaction du polyacrylamide de créer une polymérisation complète de celui-ci de mélanger la perlite expansée avec 5 à 10 % d'argile. Il a été constaté que cette quantité d'argile peut, dans certains cas, suffir pour polymériser le polyacrylamide sans l'addition de glyoxal. Cette argile peut par exemple être constituée de bentonite.

Il est encore possible, suivant l'invention, de remplacer le polyacrylamide par une émulsion bitumeuse ou éventuellement de combiner ces deux liants.

On pourrait aussi ajouter aux particules poreuses des fibres hydrophiles, de préférence des fibres de cellulose, ou hydrophobes, comme des fibres de verre. La teneur en volume des fibres peut par exemple être comprise entre 3 et 15 %, de préférence entre 5 et 10 % poids/volume.

Les particules, dont est constitué l'élément peuvent également essentiellement être formées par des fibres hachées ou broyées présentant une longueur moyenne de tout au plus 5 mm.

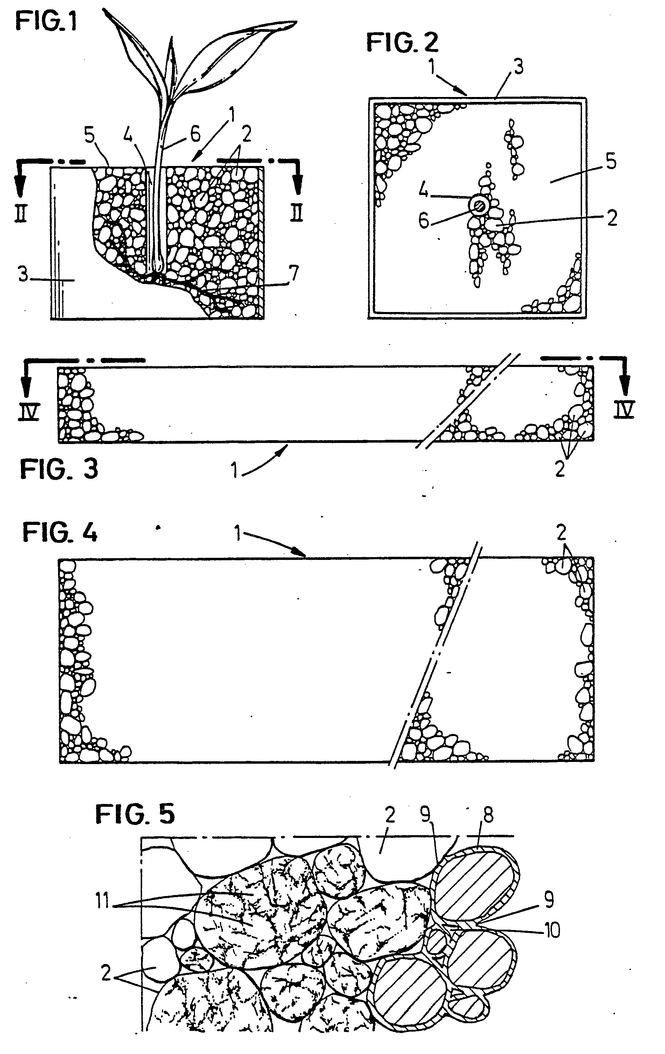

Les figures 1 et 2 représentent une première forme de réalisation d'un élément suivant l'invention qui est constitué par un bloc 1 en forme de prisme, constitué de particules de perlite expansée 2 de granulométrie variée, agglutinées par un liant à base de polyacrylamide.

Les parois latérales de ce bloc sont entourées par un film de renforcement 3, en polyéthylène par exemple, de manière à améliorer la résistance du bloc 1.

De plus, un logement cylindrique 4 s'étend à partir de la face supérieure 5 du bloc jusqu'à une certaine profondeur dans celui-ci. Ce logement sert à contenir les semences et/ou les plantes 6 dont les racines 7 se propagent entre les particules 2.

Les figures 3 et 4 concernent une autre forme de réalisation particulière de l'élément 1 suivant l'invention qui se présente sous la forme d'un mât. Vu les dimensions de ce dernier on peut éventuellement omettre le film de renforcement 3.

Des essais très satisfaisants ont été réalisés sur des blocs suivant les figures 1 et 2. Ces blocs présentent un côté latéral de 10 cm de long, une hauteur de 10 cm, une profondeur du logement 4 d'environ 5 cm avec un diamètre de l'ordre de 1 cm.

Pour ce qui concerne le mât, celui-ci présente généralement une largeur de 10 cm et une longueur de 1 mètre.

La hauteur de ces éléments peut être très variable en fonction de la nature des plantes 6 à cultiver.

La figure 5 montre, à plus grande échelle, la structure intérieure de blocs 1 réalisés en particules de perlite expansée 2 de granulométrie variée.

Comme il résulte clairement de cette figure 5, les particules 2 sont entourées d'un film très mince 8 de liant et sont simplement fixées entr'elles en quelques points 9, de sorte que des canaux capillaires 10 subsistent entre ces différentes particules 2.

Ainsi, comme déjà exposé ci-dessus, l'eau peut s'infiltrer par les canaux 10 situés entre les différentes particules et ainsi amener aux racines 7 les produits fertilisants en solution.

Par ailleurs, les particules 2 présentent une structure vésiculaire à micro-cellules 11. Surtout les cellules à la surface des particules et les canaux capillaires peuvent contenir de l'eau, tandis que les cellules situées plus vers le centre des particules contiennent essentiellement de l'air, même après que l'élément ait été saturé en eau. Ainsi, l'ensemble de ces micro-cellules peut contenir l'air nécessaire au développement des racines, en équilibre avec la phase liquide se propageant dans les canaux 10 entre les particules 2 et s'infiltrant essentiellement dans ces cellules de surface.

Par un choix de la granulométrie des particules utilisées, il est possible de régler le rapport entre les phases liquides et gazeuses dans l'élément 1, suivant l'invention. Si, par exemple, la quantité d'air nécessaire est relativement importante par rapport à la quantité d'eau, la quantité de particules présentant une section relativement importante est relativement élevée et, inversement, si la quantité relative d'eau nécessaire est relativement importante, il suffit d'avoir un excès de particules de section relativement petite.

Grâce au fait que ces particules présentent une certaine rigidité, il est possible de les compacter en présence d'un liant sans les écraser ou influencer d'une manière nuisible leurs propriétés. Ceci n'est par exemple pas possible avec des blocs réalisés en flocons de mousse de polyuréthane, de polyéthylène de polystyrène ou d'autres mousses, dans lesquels il n'est pas possible de contrôler le rapport de la phase liquide à la phase gazeuse.

Les éléments poreux, perméables et absorbants, tels que décrits ci-dessus, peuvent être fabriqués avantageusement, en pulvérisant un liant, soit en solution, en suspension ou en émulsion, sur les particules, de manière à enrober d'une façon contrôlée au moins partiellement la plus grande quantité de ces particules d'un film avec ce liant.

Les particules ainsi humectées sont alors soumises à une opération d'agglomération ou d'aggrégation jusqu'à former les éléments 1.

A cet égard, on peut compacter ces particules sous n'importe quelle forme différente de celles représentées aux figures, jusqu'à obtenir une densité moyenne de cette manière encore humide de l'ordre de 0,1 à 0,3 g/cm³.

Lors de la phase de formage, il y a lieu de veiller à maintenir la pression exercée sur les particules inférieures à leur coefficient de compressibilité. On peut estimer ce coefficient par la méthode conventionnelle décrite ci-après. On utilise un appareil de Vicat modifié dont l'aiguille inférieure est

5

remplacée par un petit plateau circulaire coulissant dans un cylindre. Celui-ci est rempli du matériau à mesurer et on charge l'équipage mobile d'un poids connu. On mesure en millimètres l'enfoncement en résultant et on calcule le poids nécessaire pour obtenir un enfoncement de 1 centimètre.

Pour les particules de perlite expansée ce coefficient est généralement compris entre 0,8 et 2,5 kg/cm²/cm, et dépend de l'origine du minerai de perlite utilisé et de son traitement ultérieur.

Dans un stade suivant, on chauffe éventuellement les blocs ou mâts formés à une température de l'ordre de 50 °C.

En réglant le dosage de la quantité de liquide en fonction de la vitesse de polymérisation du liant il est possible d'éviter la phase de séchage.

Afin de limiter le contact entre les différentes particules à un minimum de points, on peut utiliser une solution contenant 0,2 à 10 % de liant et on pulvérise celui-ci, en solution, suspension ou émulsion dans un liquide de répartition, sur les particules, jusqu'à obtenir une humidité moyenne de l'ordre de 100 à 180 %, et de préférence de l'ordre de 150 % poids/poids.

Comme déjà signalé ci-dessus, lorsqu'on utilise comme liant un hydrogel de polyacrylamide, on ajoute à celui-ci un catalyseur formé d'un dialdéhyde.

La concentration de ce catalyseur est généralement comprise entre 15 et 25 %, de préférence de l'ordre de 20 % par rapport au polyacrylamide actif.

Dans une autre forme de réalisation de l'invention, on peut faire usage, comme liant d'une émulsion de bitume présentant de préférence une concentration comprise entre 5 et 15 %, notamment de l'ordre de 10 %.

Afin de permettre d'illustrer davantage l'objet de l'invention, ci-après seront donnés quelques exemples concrets de préparation de blocs et mâts, suivant l'invention, pour la culture de plantes. Dans ces différents exemples, les quantités de matières ont été exprimés en pourcents en poids.

## Exemple 1

On prépare un mélange de particules de perlite expansée présentant la distribution granulométrique suivante, exprimée en tamis « standard » américains.

| n° de tamis | retenu au tamis en poids |
|---|---|
| + 18 | 2,5 % |
| — 18/ + 30 | 7,3 % |
| — 30/ + 50 | 28,9 % |
| — 50/ + 100 | 23,3 % |
| — 100/ + 150 | 17,4 % |
| — 150/ + 200 | 9,5 % |
| — 200 | 11,1 % |

La densité apparente moyenne de cette perlite expansée est de l'ordre de 100 kg/m³ et le coefficient de compressibilité se situe aux environs de 1,8 kg/cm²/cm.

Ces particules sont, après avoir été mélangées, humectées par une solution de polyacrylamide à 3 % jusqu'à obtenir une humidité moyenne de l'ordre de 150 %.

Ensuite, les particules enrobées de liant sont compactées dans un moule prismatique sous une pression de 1,5 Bars.

Après le compactage, les prismes, ayant par exemple une longueur de 1 mètre, sont enveloppés dans un film de polyéthylène et sont coupés en portions, de manière à obtenir des éléments en forme de polyèdres.

Après séchage à 50 °C, des logements sont forés dans ces cubes.

## Exemple 2

On part d'un mélange de particules d'argile expansée présentant sensiblement la même distribution granulométrique que dans l'exemple 1.

Ensuite on prépare la composition suivante :
— 86,35 % de particules d'argile expansée
— 2,69 % de polyacrylamide
— 10,79 % d'eau
— 0,1 % de glyoxal
— 0,022 % de $NH_4OH$

Des essais ont été effectués avec des compositions dans lesquelles la quantité de bentonite varie entre 0 et 10 % et celle du $Na_2CO_3/NaHCO_3$ varie entre 5 et 10 %.

6

**Revendications**

1. Elément poreux et perméable à l'eau pour la culture de plantes (6) contenant des particules (2) contenant un excès de particules hydrophiles, de préférence relativement peu compressibles à l'état sec, caractérisé en ce que les particules (2) sont fixées les unes aux autres essentiellement par un nombre limité de points de contact (9) en formant entr'elles des canaux sensiblement capillaires (10), ces particules (2) présentant sensiblement la granulométrie suivante, exprimée en tamis « standard » américains :

| n° de tamis | retenu au tamis en poids |
|---|---|
| + 18 | 0-5 % |
| — 18/+ 30 | 5-10 % |
| — 30/+ 50 | 10-35 % |
| — 50/+ 100 | 20-35 % |
| — 100/+ 150 | 10-25 % |
| — 150/+ 200 | 5-15 % |
| — 200 | 10-20 % |

2. Elément suivant la revendication 1, caractérisé en ce qu'au moins une partie des particules (2) présentent une structure poreuse.

3. Elément suivant l'une ou l'autre des revendications 1 et 2, caractérisé en ce qu'au moins une partie des particules (2) sont constitués d'une matière expansée.

4. Elément suivant l'une quelconque des revendications 1 à 3, caractérisé en ce que les particules (2) contiennent entre 2 et 6 % d'eau de combinaison.

5. Elément suivant l'une quelconque des revendications 1 à 4, caractérisé en ce qu'au moins une partie des particules (2) présentent une structure vésiculaire sensiblement rigide à micro-cellules.

6. Elément suivant l'une quelconque des revendications 1 à 5, caractérisé en ce que les particules sont essentiellement constituées de perlite expansé, de vermiculite expansé et/ou d'argile expansé.

7. Elément suivant l'une quelconque des revendications 1 à 6, caractérisé en ce que l'on utilise des particules ayant une densité apparente comprise entre 30 et 150 kg/m$^3$, de préférence entre 60 et 110 kg/m$^3$.

8. Elément suivant l'une quelconque des revendications 1 à 7, caractérisé en ce qu'il contient un liant hydrophile (9), insoluble dans l'eau et non toxique, pouvant de préférence former avec l'eau un gel plastique, fixant les particules entr'elles sensiblement à leurs points de contact.

9. Elément suivant la revendication 8, caractérisé en ce que le liant est formé d'un hydrogel de polyacrylamide ou d'une émulsion bitumeuse.

10. Elément suivant l'une ou l'autre des revendications 8 et 9, caractérisé en ce qu'il contient entre 1,5 et 10 %, en volume, de préférence entre 2 et 5 % de liant.

11. Elément suivant la revendication 9, caractérisé en ce que le liant est formé dudit hydrogel auquel une dialdéhyde, notamment du glyoxal, a été ajoutée en tant que catalyseur de polymérisation.

12. Elément suivant l'une quelconque des revendications 1 à 11, caractérisé en ce qu'il contient des fibres hydrophiles, de préférence des fibres de cellulose.

13. Elément suivant l'une quelconque des revendications 1 à 12, caractérisé en ce qu'il contient des fibres hydrophobes, par exemple de laine de roche ou de verre.

14. Elément suivant l'une ou l'autre des revendications 12 et 13, caractérisé en ce que la teneur en volume des fibres est comprise entre 3 et 15 %, de préférence entre 5 et 10 %.

15. Elément suivant l'une quelconque des revendications 1 à 14, caractérisé en ce qu'il contient de l'argile, notamment de la bentonite.

16. Elément suivant la revendication 15, caractérisé en ce que la teneur en volume de l'argile est comprise entre 3 et 15 %, de préférence entre 5 et 10 %.

17. Elément suivant l'une quelconque des revendications 1 à 16, caractérisé en ce qu'il est obtenu sous une pression de 1 à 8 bars, plus particulièrement de 2 à 6 bars et de préférence de l'ordre de 4 bars.

18. Elément suivant l'une quelconque des revendications 1 à 17, caractérisé en ce qu'il est formé d'un mat ou d'un bloc (1) dont les parois latérales sont entourées par un film en plastique (3).

19. Procédé de fabrication d'éléments poreux et perméables à l'eau pour la culture de plantes tels que décrits dans les revendications 1 à 18, caractérisé en ce qu'on pulvérise un liant, en solution, en suspension ou en émulsion sur les particules présentant la granulométrie indiquée dans la revendication 1, de manière à enrober au moins partiellement la plus grande quantité de ces particules d'un film de ce liant, à ce qu'on soumet les particules, humectées au moins partiellement par le liant, à une opération d'agglomération et d'agrégation jusqu'à former les éléments susdits et à ce qu'on sèche ensuite éventuellement le liant.

20. Procédé suivant la revendication 19, caractérisé en ce qu'on utilise, comme liant, un hydrogel de polyacrylamide en solution dans de l'eau.

21. Procédé suivant l'une ou l'autre des revendications 19 et 20, caractérisé en ce qu'on utilise une solution contenant de 0,2 à 10 % de liant.

22. Procédé suivant l'une quelconque des revendications 19 à 21, caractérisé en ce qu'on pulvérise le liant, en solution, en suspension ou en émulsion, sur les particules jusqu'à obtenir une humidité moyenne de l'ordre de 100 à 180 %, et de préférence de l'ordre de 150 %.

23. Procédé suivant l'une quelconque des revendications 19 à 22, caractérisé en ce qu'on ajoute au liant, contenant un hydrogel de polyacrylamide, un catalyseur formé d'une dialdehyde, de préférence du glyoxal, avec une concentration comprise entre 15 et 25 %, de préférence de l'ordre de 20 %, par rapport au polyacrylamide.

24. Procédé suivant l'une quelconque des revendications 19 à 23, caractérisé en ce qu'on utilise une solution alcaline contenant du polyacrylamide ayant un pH de l'ordre de 8 à 10, et de préférence de l'ordre de 8,5 à 9.

25. Procédé suivant la revendication 19, caractérisé en ce qu'on utilise, comme liant, une émulsion de bitume présentant de préférence une concentration comprise entre 5 et 15 %, notamment de l'ordre de 10 %.

## Claims

1. Porous and water-permeable element for plant culture (6) containing particles (2) containing an excess of hydrophilic Darticles, preferably relatively incompressible in the dry state, characterized in that the particles (2) are attached to each other essentially by a limited number of points of contact (9), together forming substantially capillary channels (10), these particles (2) having substantially the following particle size distribution, expressed using standard US sieves :

| Sieve No. | Retained on the sieve by weight |
|---|---|
| + 18 | 0-5 % |
| — 18/+ 30 | 5-10 % |
| — 30/+ 50 | 10-35 % |
| — 50/+ 100 | 20-35 % |
| — 100/+ 150 | 10-25 % |
| — 150/+ 200 | 5-15 % |
| — 200 | 10-20 % |

2. Element according to Claim 1, characterized in that at least a proportion of the particles (2) have a porous structure.

3. Element according to either of Claims 1 and 2, characterized in that at least a proportion of the particles (2) consist of an expanded material.

4. Element according to any one of Claims 1 to 3, characterized in that particles (2) contain between 2 and 6 % of combined water.

5. Element according to any one of Claims 1 to 4, characterized in that at least a proportion of the particles (2) have a substantially rigid vesicular structure with microcells.

6. Element according to any one of Claims 1 to 5 characterized in that the particles consist essentially of expanded ferlite, of expanded vermiculite (sic) and/or expanded clay.

7. Element according to any one of Claims 1 to 6, characterized in that particles which have an apparent density of between 30 and 150 kg/cm$^3$ (sic), preferably between 60 and 110 kg/m$^3$, are employed.

8. Element according to any one of Claims 1 to 7, characterized in that it contains a water-insoluble, nontoxic, hydrophilic binder (9), preferably capable of forming with water a plastic gel immobilizing particles relative to each other substantially at their points of contact.

9. Element according to Claim 8, characterized in that the binder consists of a polyacrylamide hydrogel or of a bituminous emulsion.

10. Element according to either of Claims 8 and 9, characterized in that it contains between 1.5 and 10 %, preferably between 2 and 5 %, by volume of binder.

11. Element according to Claim 9, characterized in that the binder consists of the said hydrogel, to which a dialdehyde, especially glyoxal, has been added as a polymerization catalyst.

12. Element according to any one of Claims 1 to 11, characterized in that it contains hydrophilic fibres, preferably cellulose fibres.

13. Element according to any one of Claims 1 to 12, characterized in that it contains hydrophobic fibres, for example of rock wool or of glass.

14. Element according to either of Claims 12 and 13, characterized in that the content of the fibres by volume is between 3 and 15 %, preferably between 5 and 10 %.

15. Element according to any one of Claims 1 to 14, characterized in that it contains clay, especially bentonite.

16. Element according to Claim 15, characterized in that the content of clay by volume is between 3 and 15 %, preferably between 5 and 10 %.

17. Element according to any one of Claims 1 to 16, characterized in that it is obtained under a pressure of 1 to 8 bars, more particularly from 2 to 6 bars and preferably of the order of 4 bars.

18. Element according to any one of Claims 1 to 17, characterized in that it consists of a mat or of a block (1) whose side walls are surrounded by a film of plastic (3).

19. Process for the manufacture of porous and water-permeable elements for plant culture, such as described in Claims 1 to 18, characterized in that a binder, in solution, in suspension or in emulsion, is sprayed onto the particles having the particle size distribution indicated in Claim 1, so as to coat at least partially to coat the majority of these particles with a film of this binder, in that the particles, at least partially moistened by the binder, are subjected to an agglomeration and agregation operation until the abovementioned elements are formed, and in that the binder is then dried if desired.

20. Process according to claim 19, characterized in that a polyacrylamide hydrogel in solution in water is employed as a binder.

21. Process according to either of Claims 19 and 20, characterized in that a solution containing from 0.2 to 10 % of binder is employed.

22. Process according to any one of Claims 19 to 21, characterized in that the binder, in solution, in suspension or in emulsion, is sprayed onto the particles until an average moisture content of the order of 100 to 180 %, and preferably of the order of 150 %, is obtained.

23. Process according to any one of Claims 19 to 22, characterized in that a catalyst consisting of a dialdehyde, preferably glyoxal, with a concentration of between 15 and 25 %, preferably of the order of the 20 %, relative to polyacrylamide, is added to the binder containing a polyacrylamide hydrogel.

24. Process according to any one of Claims 19 to 23, characterized in that an alkaline solution containing polyacrylamide which has a pH of the order of 8 to 10, and preferably of the order of 8.5 to 9, is employed.

25. Process according to Claim 19, characterized in that a bitumen emulsion whose concentration is preferably between 5 and 15 %, especially of the order of 10 %, is employed as a binder.

## Patentansprüche

1. Poröses und wasserdurchlässiges Element für die Kultur von Pflanzen (6), enthaltend Teilchen (2) mit einem Überschußanteil an hydrophilen Teilchen, welche vorzugsweise im trockenen Zustand relativ wenig komprimierbar sind, dadurch gekennzeichnet, daß die Teilchen (2) untereinander im wesentlichen an einer begrenzten Anzahl von Berührungspunkten (9) fixiert sind und zwischeneinander im wesentlichen kapillare Kanäle (10) bilden, und daß die Teilchen im wesentlichen die folgende Korngrößenverteilung, ausgedrückt in amerikanischen Standard-Siebzahlen, haben :

| Siebzahl | ausgesiebter Gewichtsanteil |
|---|---|
| + 18 | 0-5 % |
| — 18/+ 30 | 5-10 % |
| — 30/+ 50 | 10-35 % |
| — 50/+ 100 | 20-35 % |
| — 100/+ 150 | 10-25 % |
| — 150/+ 200 | 5-15 % |
| — 200 | 10-20 % |

2. Element nach Anspruch 1, dadurch gekennzeichnet, daß wenigstens ein Teil der Teilchen (2) ein poröses Gefüge aufweist.

3. Element nach einem der Ansprüche 1 und 2, dadurch gekennzeichnet, daß wenigstens ein Teil der Teilchen (2) aus einem expandierten Material gebildet ist.

4. Element nach einem der Ansprüche 1 bis 3, dadurch gekennzeichnet, daß die Teilchen (2) zwischen 2 und 6 % Bindungswasser enthalten.

5. Element nach einem der Ansprüche 1 bis 4, dadurch gekennzeichnet, daß wenigstens ein Teil der Teilchen (2) ein im wesentlichen starres, blasenförmiges Mikrozellengefüge aufweist.

6. Element nach einem der Ansprüche 1 bis 5, dadurch gekennzeichnet, daß die Teilchen im wesentlichen aus expandiertem Perlit, expandiertem Vermikulit und/oder expandiertem Ton gebildet sind.

7. Element nach einem der Ansprüche 1 bis 6, dadurch gekennzeichnet, daß die scheinbare Dichte der verwendeten Teilchen zwischen 30 und 150 kg/m$^3$, vorzugsweise zwischen 60 und 110 kg/m$^3$ liegt.

8. Element nach einem der Ansprüche 1 bis 7, dadurch gekennzeichnet, daß es einen in Wasser unlöslichen und nicht toxischen, hydrophilen Binder (9) enthält, welcher vorzugsweise mit Wasser ein plastisches Gel bildet, welches die Teilchen in wesentlichen an ihren Berührungspunkten untereinander fixiert.

9. Element nach Anspruch 8, dadurch gekennzeichnet, daß der Binder aus einem Polyacrylamid-Hydrogel oder aus einer bituminösen Emulsion gebildet ist.

10. Element nach einem der Ansprüche 8 und 9, dadurch gekennzeichnet, daß es zwischen 1,5 und 10 %, vorzugsweise zwischen 2 und 5 Vol.% Binder enthält.

11. Element nach Anspruch 9, dadurch gekennzeichnet, daß der Binder aus dem genannten Hydrogel begildet ist, welchem ein Dialdehyd, insbesondere Glyoxal, als Polymerisationskatalysator zugesetzt wurde.

12. Element nach einem der Ansprüche 1 bis 11, dadurch gekennzeichnet, daß es hydrophile Fasern, vorzugsweise Zellulosefasern enthält.

13. Element nach einem der Ansprüche 1 bis 12, dadurch gekennzeichnet, daß es hydrophobe Fasern enthält, beispielsweise Stein- oder Glaswolle.

14. Element nach einem der Ansprüche 12 und 13, dadurch gekennzeichnet, daß der Volumenanteil der Fasern zwischen 3 und 15 %, vorzugsweise zwischen 5 und 10 % liegt.

15. Element nach einem der Ansprüche 1 bis 14, dadurch gekennzeichnet, daß es Ton, insbesondere Bentonit enthält.

16. Element nach Anspruch 15, dadurch gekennzeichnet, daß der Volumengehalt an Ton zwischen 3 und 15 %, vorzugsweise zwischen 5 und 10 % liegt.

17. Element nach einem der Ansprüche 1 bis 16, dadurch gekennzeichnet, daß es unter einem Druck von 1 bis 8 bar, insbesondere 2 bis 6 bar, und vorzugsweise in der Größenordnung von 4 bar gefertigt ist.

18. Element nach einem der Ansprüche 1 bis 17, dadurch gekennzeichnet, daß es in Form einer Matte oder eines Blocks (1) ausgebildet ist, dessen Seitenwände von einer Kunststoffsqchicht (3) umgeben sind.

19. Verfahren zum Herstellen von porösen und wasserdurchlässigen Elementen für die Pflanzenkultur der in Anspruch 1 bis 18 beschriebenen Art, dadurch gekennzeichnet, daß man einen in Lösung, in Suspension oder in Emulsion vorliegenden Binder derart auf die im Anspruch 1 angegebene Korngrößenverteilung aufweisende Teilchen versprüht, daß der größtmögliche Anteil der Teilchen wenigstens teilweise mit einer Schicht des Binders überzogen wird, daß man die wenigstens teilweise mit dem Binder befeuchteten Teilchen einer agglomerierenden und verdichtenden Behandlung zur Bildung der genannten Elemente unterwirft und daß man den Binder gegebenenfalls anschließend trocknet.

20. Verfahren nach Anspruch 19, dadurch gekennzeichnet, daß man als Binder ein Polyacrylamid-Hydrogel in wässriger Lösung verwendet.

21. Verfahren nach einem der Ansprüche 19 und 20, dadurch gekennzeichnet, daß man eine 0,2 bis 10 % des Binders enthaltende Lösung verwendet.

22. Verfahren nach einem der Ansprüche 10 bis 21, dadurch gekennzeichnet, daß man den in Lösung, in Suspension oder als Emulsion vorliegenden Binder auf die Teilchen zerstäubt, bis man einen mittleren Feuchtigkeitsgehalt zwischen etwa 100 und 180 %, vorzugsweise von etwa 150 % erhält.

23. Verfahren nach einem der Ansprüche 19 bis 22, dadurch gekennzeichnet, daß man dem ein Polyacrylamid-Hydrogel enthaltenden Binder einen aus einem Dialdehyd, vorzugsweise glyoxal gebildeten Katalysator in einer Konzentration zwischen 15 und 25 %, vorzugsweise von etwa 20 %, bezogen auf das Polyacrylamid, zusetzt.

24. Verfahren nach einem der Ansprüche 19 bis 23, dadurch gekennzeichnet, daß man eine Polyacrylamid enthaltende alkalische Lösung verwendet, welche einen pH-Wert von etwa 8 bis 10, vorzugsweise von etwa 8,5 bis 9 aufweist.

25. Verfahren nach Anspruch 19, dadurch gekennzeichnet, daß man als Binder eine Bitumen-Emulsion verwendet, welche vorzugsweise eine Konzentration zwischen 5 und 15 %, insbesondere von etwa 10 % aufweist.

FIG.1

FIG. 2

FIG. 3

FIG. 4

FIG. 5